# EUROPÄISCHE PATENTSCHRIFT

(11) **EP 4 367 421 B1**
(45) Veröffentlichungstag und Bekanntmachung des Hinweises auf die Patenterteilung: **18.02.2026**
(21) Anmeldenummer: 22734603.8
(22) Anmeldetag: 22.06.2022
(51) Int. Cl.: F16K 3/08, F16K 3/314, F16K 3/02

(54) **VENTIL ZUR REGULIERUNG EINES DURCHFLUSSES EINES MEDIUMS**
VALVE FOR REGULATING A FLOW OF A MEDIUM
VANNE DE RÉGULATION D'UN ÉCOULEMENT D'UN MILIEU

(30) Priorität: 09.07.2021 DE 102021117773
(43) Veröffentlichungstag der Anmeldung: 15.05.2024
(73) Patentinhaber: Viega Technology GmbH & Co. KG, 57439 Attendorn (DE)
(72) Erfinder: ROSENTHAL, Jörg, 51580 Reichshof-Eckenhagen (DE); WESSELS, Jan, 57462 Olpe (DE)
(74) Vertreter: Cohausz & Florack
(86) Internationale Anmeldenummer: PCT/EP2022/066994
(87) Internationale Veröffentlichungsnummer: WO 2023/280567

(56) Entgegenhaltungen:
- EP-A1- 1 884 693
- KR-B1- 101 356 606
- US-A- 1 806 530
- US-A- 3 396 904
- US-A1- 2011 260 087
- US-A1- 2015 099 456
- US-B1- 6 192 922

## Beschreibung

Die Erfindung betrifft ein Ventil zur Regulierung eines Durchflusses eines Mediums.

Für die Regulierung des Durchflusses von Medien wie etwa Flüssigkeiten oder Gasen beispielsweise in Leitungen werden Armaturen eingesetzt, mit Hilfe derer die Leitungen oder sonstige Durchtrittsöffnungen kontrolliert geöffnet und geschlossen werden können. Beispiele für solche Armaturen sind Absperr- oder Reglungsventile, die manuell oder mittels Motoren betrieben werden können und die mehrere Anschlüsse, beispielsweise einen oder mehrere Zuflüsse und einen oder mehrere Abflüsse, aufweisen können.

Abhängig von der Form der Durchflussöffnung durch das Ventil und der Form des Absperrkörpers wird zwischen verschiedenen Ventiltypen unterschieden.

Beispielsweise hebt sich bei Hubventilen der Absperrkörper senkrecht von einer Öffnung ab und gibt diese frei. Beim Ringventil ist die Öffnung dagegen nur außen frei, etwa weil in der Mitte eine Achse liegt. Der Absperrkörper kann unter anderem als Teller, Zylinder, Kegel bzw. Kegelstumpf, Regulierkegel, Kugel oder in Form von ein oder mehrerer Scheiben ausgebildet sein. Weiter kann je nach Geometrie des Ventils eine Umlenkung des durchströmenden Mediums innerhalb des Ventils erfolgen.

Insbesondere für Absperrventile wird ein in geöffnetem Zustand des Ventils möglichst geringer Druckverlust des durchfließenden Mediums, d.h. ein möglichst geringer Strömungswiderstand des Ventils, angestrebt, so dass der Durchfluss des Mediums in geöffnetem Ventilzustand möglichst wenig beeinflusst wird. Im geschlossenen Zustand dagegen soll das Ventil den Durchtritt des Mediums möglichst vollständig verhindern und dicht abschließen.

Gleichzeitig sollen Armaturen möglichst gute Verschließeigenschaften aufweisen, so dass sie eine hohe Lebensdauer aufweisen und der Wartungsaufwand sowie Kosten für Reparatur- oder Instandsetzungsmaßnahmen und Komponentenaustausch gering gehalten werden können.

Zusätzlich sind minimale Stellkräfte zur Betätigung, sowohl bei manuellen als auch bei motorenangetriebenen Ventilen, vorteilhaft. Geringe Stellkräfte resultieren unter anderem in einer platzsparenden Ventilbauweise beziehungsweise kann die zum Betrieb des Antriebsmotors des Ventils notwendige Leistung minimiert werden.

So sind insbesondere elektronische Absperrarmaturen auf verschleißarme Absperrorgane mit geringem Betätigungsmoment angewiesen, um die Funktion mit möglichst klein dimensionierten Antriebseinheiten über die gesamte Lebensdauer der Armatur sicherzustellen. Auch dient ein geringes Betätigungselement der einfachen manuellen Bedienung eines Ventils.

Unter anderem aufgrund ihrer guten Verschleißeigenschaften und geringen Betätigungsmomente werden in vielen Armaturen zum Absperren und Regeln von Durchflussmengen, wie etwa in Einhebelmischern und Mischbatterien, keramische Ventile, wie etwa Ventile mit keramischen Dicht- und Regelscheiben, verwendet.

Beispielsweise ist die Verwendung zweier gegeneinander verdrehbarer keramischer Ventilscheiben mit jeweils mindestens einer Öffnung bekannt, mithilfe derer in einer Position der Ventilscheiben zueinander eine vollständige Absperrung der Durchflussmenge in der Armatur erfolgt. Liegen die Öffnungen der beiden Ventilscheiben übereinander, ist das Absperrorgan der Armatur dagegen geöffnet.

Allerdings weisen keramische Absperrorgane hohe Druckverluste auf, so dass diese fast ausschließlich bei Auslaufarmaturen, wie etwa Wasserhähnen, bei denen der Druckverlust durch das Ventil eine weniger bedeutsame Rolle als beispielsweise bei der Wasserverteilung dienenden Leitungen zukommt, Anwendung finden.

Bei Schieberventilen kann zum vollständigen Verschluss des Durchflusses des zu regulierenden Mediums ein Schieber, beispielsweise in Form einer Platte, senkrecht zur Strömungsrichtung des Mediums in die zu versperrende Leitung geschoben werden. In der Theorie kann der Schieber für die Öffnung des Ventils vollständig aus der zu versperrenden Leitung herausgefahren werden, so dass bei diesen Ventilen die maximale Öffnungsfläche bis zu 100 % der Fläche des Strömungsquerschnitts des durchströmenden Mediums betragen kann.

Als Strömungsquerschnitt wird der Querschnitt an der Position, an der sich der oder die Absperrkörper zur Regulierung des Durchflusses befindet oder befinden, beispielsweise an dem der Schieber in das Medium geschoben wird, verstanden. Wird ein solcher Schieber beispielsweise in einer kreisrunden Leitung mit Rohrdurchmesser d eingesetzt, kann in der Theorie bei vollständig geöffnetem Ventil eine maximale Öffnungsfläche von 100 % der Fläche Strömungsquerschnitts, der dem Leitungsquerschnitt entspricht und *A = π*d²*/*4* beträgt, erreicht werden.

In der Theorie beträgt die gesamte sich ergebende Öffnungsfläche bei einem Scheibenventil mit zwei Ventilscheiben mit Durchtrittsöffnungen zur Regulierung des Durchflusses, die Querschnittsfläche also, die für den Durchtritt des zu regulierenden Mediums zur Verfügung steht, maximal 50% des Strömungsquerschnitts. In der Praxis aber ist sie aufgrund der für die Absperrung notwendigen Überlappung der Ventilscheiben kleiner als 50%, da für den geschlossenen Zustand sicherzustellen ist, dass der Durchfluss des Mediums möglichst vollständig blockiert ist.

Aus diesem Grund ist eine Anwendung von Scheibenventilen, insbesondere von keramischen Scheibenventilen, als Absperrarmatur innerhalb von Verteilleitungen, für die der Druckverlust eine wichtige Kenngröße ist und möglichst minimiert werden soll, ungünstig,

Daneben sind aus dem Stand der Technik für die Durchflussregelung von Medien in Leitungen oder Rohren, beispielsweise Trinkwasser in Trinkwasserinstallationen, unter anderem Schrägsitzventile oder auch Kugelhähne als Reglungs- oder Absperrarmaturen bekannt. Diese und andere Formen von Absperrventilen weisen allerdings weitere Nachteile auf.

Beispielsweise weisen Kugelhähne höhere Betätigungsmomente auf und sind verschleißanfälliger. Schrägsitzventile haben aufgrund des linearen Hubs Nachteile bei der Adaption eines elektronischen Antriebs, insbesondere da die rotatorische Bewegung weitverbreiteter Elektromoren zunächst einer Übersetzung in eine Linearbewegung bedarf. Dies wirkt sich beispielsweise nachteilig auf den Konstruktionsaufwand und benötigten Bauraum sowie auf die Schließdauer des Ventils aus.

KR 101 356 606 B1 beschreibt ein Drosselventil mit drei Ventilscheiben, von denen zwei Scheiben mittels eines Antriebs, das in Führungen in diesen Scheiben eingreift, rotierbar gegenüber der weiteren Scheibe angeordnet sind.

US 6,192,922 B1 betrifft ein Ventil zur Durchflussregulierung mit einer fest angeordneten Scheibe und zwei gegenüber dieser Scheibe rotierbar angeordneten Scheiben, wobei durch Drehung einer der drehbeweglichen Scheiben auch die weitere drehbewegliche Scheibe gedreht wird.

In US 1,806,530 ist ein in ein Rohr einsetzbares Ventil zur Durchflussregulierung beschrieben, das eine fest installierte Ventilscheibe und zwei gegenüber dieser Scheibe drehbewegliche angeordnete Ventilscheiben aufweist. Die drehbeweglichen Ventilscheiben werden durch Drehung eines Ventilschafts angetrieben.

US 2011/0260087 A1 beschreibt ein Drehventil mit zwei Statoren und mindestens zwei Rotoren jeweils mit Kreissegment-förmigen Durchtrittsöffnungen, wobei in einer vollständig geöffneten Position die maximale Durchtrittsfläche des Ventils abhängig von der Anzahl der Rotoren ist.

In US 3,396,904 ist ein einstellbares Ventil mit einem Gehäuse, in dem eine fest installierte Ventilscheibe angeordnet ist, beschrieben. Es sind außerdem zwei drehbewegliche Ventilscheiben vorgesehen, deren Bewegung jeweils durch Endanschläge relativ zu der fest installierten Ventilscheibe begrenzt wird.

Daher liegt der vorliegenden Erfindung das technische Problem zugrunde, ein Ventil zur Regulierung eines Durchflusses eines Mediums zur Verfügung zu stellen, das die für den Stand der Technik beschriebenen Nachteile verbessert und insbesondere den Druckverlust miniminiert.

Das zuvor aufgeführte technische Problem wird erfindungsgemäß durch ein Ventil zur Regulierung eines Durchflusses eines Mediums gelöst mit einem Gehäuse und mit mindestens drei Ventilscheiben, wobei mindestens eine Ventilscheibe im Gehäuse drehfest angeordnet ist, wobei mindestens zwei Ventilscheiben gegenüber der mindestens einen drehfest angeordneten Ventilscheibe drehbeweglich angeordnet sind, wobei die Ventilscheiben jeweils mindestens eine Durchtrittsöffnung aufweisen, wobei die Durchtrittsöffnungen derart ausgebildet sind, dass in einer ersten relativen Position der Ventilscheiben der Durchfluss des Mediums blockiert ist und in einer zweiten relativen Position maximal geöffnet ist, wobei die Durchtrittsöffnungen derart ausgebildet sind, dass in der zweiten relativen Position die Durchtrittsöffnungen der Ventilscheiben eine Öffnungsfläche von mehr als 50 %, bevorzugt von mehr als 60 %, besonders bevorzugt von mehr als 65 %, der Fläche des Strömungsquerschnitts freigeben, wobei die Ventilscheiben eine baugleiche Geometrie aufweisen, wobei Endanschläge zur Begrenzung der Drehbewegung der drehbeweglichen Ventilscheiben vorgesehen sind, wobei die Endanschläge die Drehbewegung der drehbeweglichen Ventilscheiben in Relation zueinander benachbarter Ventilscheiben jeweils betragsmäßig auf denselben maximalen Winkel δ, bevorzugt δ = 120°, begrenzen, und wobei es sich bei den drehbeweglichen und der drehfest angeordneten Ventilscheiben um die gleichen Ventilscheiben handelt.

Somit wird ein Ventil angegeben, das gegenüber den aus dem Stand der Technik bekannten Ventilen eine vergrößerte Öffnungsfläche angibt, so dass der Druckverlust verringert werden kann. Auf diese Weise ist es möglich, das erfindungsgemäße Ventil auch an Positionen, insbesondere in Leitungen, zu verwenden, an denen ein niedriger Druckverlust von Bedeutung ist. So wird die Flexibilität des möglichen Einsatzes von Ventilen durch die erfindungsgemäßen Ventilscheiben mit Durchtrittsöffnungen vergrößert.

In der ersten relativen Position der Ventilscheiben ist erfindungsgemäß der Durchfluss des Mediums blockiert. Unter einem blockierten Durchfluss wird dabei verstanden, dass das Ventil den Durchfluss im Wesentlichen vollständig blockiert und beispielsweise eine zu versperrende Leitung, etwa eine Wasser- oder eine Gasleitung, dicht abschließt. Es kann allerdings auch vorgesehen sein, in der ersten relativen Position gewisse Leackageströme des zu regulierenden Mediums zuzulassen. Auch kann vorgesehen sein, dass die Dichtheit nur bei bestimmten Medien, oder bei bestimmten Medieneigenschaften, wie etwa bis zu einem gewissen Dampfdruck einer Flüssigkeit, in der ersten relativen Position gewährleistet ist.

Weiter ist erfindungsgemäß der Durchfluss des Mediums in einer zweiten relativen Position maximal geöffnet. Unter einer maximalen Öffnung wird im Rahmen der Erfindung die bedingt durch die Geometrie des Ventils maximal erreichbare Durchtrittsfläche des durchströmenden Mediums verstanden.

Die Fläche des Strömungsquerschnitts wird im Rahmen der Erfindung als diejenige Fläche verstanden, die dem durch das Ventil strömende Medium im Querschnitt an der Position, an der sich die Absperrkörper zur Regulierung des Durchflusses, vorliegend die Ventilscheiben, befinden.

Bei Verwendung von mehr als zwei Ventilscheiben zur Regulierung des Durchflusses kann somit die maximale gesamte Öffnungsfläche eines Ventils vergrößert werden. So beträgt in der Theorie die gesamte sich ergebende Öffnungsfläche bei der Verwendung von mehr als zwei Ventilscheiben über 50 % der Fläche des Strömungsquerschnitts. Somit kann bei der Verwendung von drei Ventilscheiben eine maximale gesamte Öffnungsfläche von 2/3 der Fläche des Strömungsquerschnitts erreicht werden.

Werden mehr als drei Ventilscheiben verwendet, kann die maximale Öffnungsfläche weiter vergrößert werden. Beispielsweise kann bei Verwendung von vier Ventilscheiben in der Theorie eine maximale Öffnungsfläche von ¾ (75%) der Fläche des Strömungsquerschnitts erreicht werden. Es wurde erkannt, dass allgemein für ein Ventil mit Verwendung von mindestens zwei Ventilscheiben, dass in einer relativen ersten Position der Ventilscheiben zueinander den Durchfluss des zu regulierenden Mediums vollständig blockieren soll, allgemein für n verwendete Ventilscheiben eine maximale Öffnungsfläche von (n-1)/n in der Theorie erreicht werden kann. Für das Erreichen einer Durchflussblockade in einer ersten Position und der maximal möglichen Öffnungsfläche in einer zweiten Position ist es dabei notwendig, dass die Ventilscheiben relativ zueinander beweglich sind und jeweils mindestens eine Durchtrittsöffnung aufweisen.

Bevorzugt sind die Ventilscheiben auf einer gemeinsamen Achse, insbesondere zentrisch, gelagert und um diese Achse drehbar. Dies ermöglicht einen besonders einfachen und platzsparenden Aufbau des Ventils und führt somit zu geringen Herstellungskosten sowie zu einem geringen benötigten Bauraum am Bestimmungsort des Ventils.

Das Gehäuse kann ein- oder mehrteilig ausgebildet sein. Bei einem mehrteilig ausgebildeten Gehäuse können Dichtelemente, bevorzugt Dichtringe, insbesondere O-Ringe aus geeigneten Kunststoffen, zur Abdichtung der Gehäuseteile untereinander dienen, so dass das zu regulierende Medium nicht aus dem Ventil austreten kann. Für die Dichtelemente können Aussparungen in den Gehäuseteilen, insbesondere Nuten, beispielsweise für den Einsatz von Dichtringen, vorgesehen sein.

Die Ventilscheiben weisen erfindungsgemäß eine baugleiche Geometrie auf. Auf diese Weise kann die Herstellung des Ventils in besonders hohem Maße vereinfacht und damit kostengünstiger gestaltet werden.

Durch das erfindungsgemäße Ventil wird eine Möglichkeit angegeben, den Druckverlust durch die Ventilscheibenkonstruktion zu verringern und eine größere Durchtrittsfläche für das zu regulierende Medium zu ermöglichen. Die Verringerung des Druckverlusts stellt einen erheblichen Vorteil gegenüber aus dem Stand der Technik bekannten Scheibenventilen dar. Da der Druckverlust maßgebend ist bei der Rohrdimensionierung, können auf diese Weise die Investitionskosten verringert werden. Darüber hinaus wirken sich der aus einer geringeren Rohrdimensionierung resultierende verringerte Rohrleitungsinhalt sowie die höheren Strömungsgeschwindigkeiten positiv auf die Hygiene aus.

Bei dem zu regulierenden Medium kann es sich um eine Flüssigkeit, beispielsweise Wasser, oder ein Gas handeln. Das Ventil kann als elektronische Absperr- und Regelarmatur eingesetzt werden. Beispielsweise ist ein Einsatz bei der Haus-oder Wohnungsabsperrung in Kombination mit einem Leckageschutzsystem möglich, so dass bei Erkennen einer Leckage das Ventil eine zu dem Haus oder der Wohnung führende Leitung absperren kann.

Auch der Einsatz für die Durchflussregelung bei der Trinkwasserzirkulation oder für die Regelung des hydraulischen Abgleichs in Heizungssträngen sowie als Strang-, Etagen-, Wohnungs- oder Hausabsperrung in Trink- und Heizungssystemen ist denkbar.

Im Folgenden werden verschiedene bevorzugte Ausführungsformen des Ventils beschrieben.

Bei einer ersten Ausführungsform des Ventils weisen die Ventilscheiben ein keramisches Material auf. Insbesondere bestehen die Ventilscheiben aus einem keramischen Material. Auch kann lediglich eine Beschichtung aus einem keramischen Material vorgesehen sein.

Keramische Bauteile für Ventile, insbesondere Ventilscheiben, weisen gute Verschleißeigenschaften aus, so dass somit ein Ventil mit hoher Lebensdauer angegeben werden kann. Darüber hinaus zeichnen sich Ventile mit Ventilscheiben, die ein keramisches Material aufweisen, durch geringe Betätigungskräfte und somit geringe Betätigungsdrehmomente auf, woraus eine vereinfachte Bedienung und Steuerung der Ventile resultiert. Insbesondere können diese Ventile gut mit gängigen Schrittmotoren kombiniert werden. Dadurch wird insgesamt die Flexibilität der Einsatzmöglichkeiten und Verwendungen des Ventils erhöht. Auch können so die auf die Bauteile des Ventils aufgebrachten Kräfte verringert werden.

Durch die Möglichkeit der Automatisierung ist es außerdem möglich, das Ventil mit elektronischen Systemen, beispielsweise in Leckageschutzsystemen mit automatischer Absperrfunktion bei Detektion einer Leckage, zu verwenden. Mittels der Kombination des verringerten Druckverlusts durch die Ventilscheibenkonstruktion und der Vorteile keramischer Ventile wird somit ein vielseitig einsetzbares Ventil angegeben, das insbesondere den Einsatz keramischer Ventile für Anwendungen, bei denen ein niedriger Druckverlust maßgeblich ist, ermöglicht.

Mögliche keramische Materialien sind Siliziumcarbid (SiC), Aluminiumoxid (Al₂O₃) oder Zirkonoxidkeramik (ZrO₂). Diese Materialien haben sich als besonders verschleißarm und somit geeignet für den Einsatz in Ventilen erwiesen. Besonders vorteilhaft als keramische Beschichtungen der Ventilscheiben eignen sich Siliziumcarbid (SiC), Titannitrid (TiN) oder DLC (Diamond-Like Carbon). Keramische Materialien zeichnen sich insbesondere durch ihre gute chemische Beständigkeit sowie hohe Härte und Druckfestigkeit bis in hohe Temperaturbereiche aus. Somit ermöglichen sie den Einsatz von Ventilen zur Regulierung von einer Vielzahl an Medien bei Bedingungen, die für andere Materialien, beispielsweise Stähle, zu aggressiv sind.

Bei einer weiteren Ausführungsform des Ventils sind die Durchtrittsöffnungen im Wesentlichen als Kreissektoren ausgebildet und weisen die Kreissektoren jeweils einen Öffnungswinkel α von größer 180°, bevorzugt von größer 200°, besonders bevorzugt von 240°, auf.

Im Wesentlichen als Kreissektoren ausgestaltete Durchtrittsöffnungen eignen sich vorteilhaft zur Verwendung bei drehbeweglichen Ventilscheiben. Dabei werden als im Wesentlichen als Kreissektoren ausgestaltete Durchtrittsöffnungen solche Öffnungen verstanden, die die Form eines Kreissektors aufweisen, bei denen aber durch Aussparungen oder Vorsprünge kleine Abweichungen von der Form eines Kreissektors bestehen können. Beispielsweise können die Ecken des Kreissektors leicht abgerundet sein.

Auf diese Weise kann durch die Durchtrittsöffnungen beispielsweise bei einem kreisrunden Querschnitt der zu versperrenden Leitung der maximal zur Verfügung stehende Strömungsquerschnitt optimal ausgenutzt werden. Bei drei Ventilscheiben, die jeweils Kreissektoren *α* von größer 180° bzw. größer 200°, bzw. von 240° aufweisen, kann in der zweiten relativen Position der Ventilscheiben eine Öffnungsfläche für den Durchtritt des zu regulierenden Mediums in Form eines Kreissektors mit einem maximalen Öffnungswinkel von mehr als 180° bzw. mehr als 200°, bzw. von 240° erreicht werden. Somit kann eine maximale Öffnungsfläche von bis zu 2/3 des Strömungsquerschnitts erreicht werden.

Die Öffnungswinkel der Ventilscheiben können die gleiche Größe aufweisen. Daneben sind unterschiedliche Öffnungswinkel möglich. Insbesondere können die Durchtrittsöffnungen geometrisch deckungsgleich ausgestaltet sein. Die äußere Form der Ventilscheiben kann im Wesentlichen einer Kreisform entsprechen, es sind aber auch von einer Kreisform abweichende Formen, beispielsweise mit Ecken, Kanten oder Aussparungen versehene Ventilscheiben, möglich.

Bei einer weiteren Ausführungsform des Ventils weisen die Ventilscheiben jeweils mindestens zwei Durchtrittsöffnungen auf, sind die Durchtrittsöffnungen im Wesentlichen als Kreissektoren ausgebildet und weisen die Kreissektoren jeweils einen Öffnungswinkel α von größer 90°, bevorzugt von größer 100°, besonders bevorzugt von 120°, auf.

Werden zwei oder mehrere Durchtrittsöffnungen jeweils für eine Ventilscheibe angegeben, kann, bevorzugt bei gleichbleibender Durchtrittsfläche pro Ventilscheibe, die Stabilität der einzelnen Ventilscheiben und somit des Ventils erhöht werden. Die erhöhte Stabilität ergibt sich durch die Verkleinerung der zusammenhängenden freien Durchtrittsfläche. Beispielsweise können Stege, bevorzugt radial auf die Drehachse der Ventilscheibe zugehend, zwischen den als Kreissektoren ausgebildeten Kreissektoren vorgesehen sein.

Beispielsweise bei Ventilscheiben jeweils mit Durchtrittsöffnungen in Form von Kreissektoren mit einem Öffnungswinkel α von 120° kann ebenfalls, abhängig von der Dicke der Stege, eine maximale Öffnungsfläche von bis zu 2/3 des Strömungsquerschnitts erreicht werden. Gleichzeitig wird durch das Vorsehen von zwei Durchtrittsöffnungen anstatt nur einer Durchtrittsöffnung pro Ventilscheibe die Stabilität der Ventilscheibe erhöht. Eine erhöhte Stabilität trägt vorteilhaft zu einem geringeren Verschließ des Ventils und einer höheren Lebensdauer bei.

Darüber hinaus weisen keramische Materialien gegenüber anderen für Ventile verwendeten Materialien ein geringes Gewicht auf, somit muss weniger Kraft zur Bewegung der Ventilscheiben aufweisend keramische Materialien aufgewendet werden.

Bei einer weiteren Ausführungsform des Ventils ist eine Mitnehmerkonstruktion zur Drehung der drehbeweglichen Ventilscheiben von der ersten Position in die zweite Position der Ventilscheiben vorgesehen und bewirkt die Mitnehmerkonstruktion bei Drehung mindestens einer ersten drehbeweglichen Ventilscheibe die Drehung mindestens einer zweiten drehbeweglichen Ventilscheibe, vorzugsweise aller weiteren drehbeweglichen Ventilscheiben.

Durch das Vorsehen einer Mitnehmerkonstruktion kann somit bei Drehung mindestens einer aktiv gedrehten drehbeweglichen Ventilscheibe mindestens eine zweite drehbewegliche Ventilscheibe mitgedreht werden, wobei die Drehung der drehbeweglichen Ventilscheiben jeweils gegenüber der drehfest angeordneten Ventilscheibe und somit gegenüber dem Gehäuse erfolgt. Auf diese Weise kann durch die Bewegung einer einzelnen oder jedenfalls einiger weniger Ventilscheiben die Bewegung der Gesamtheit oder jedenfalls mehrerer der drehbeweglichen Ventilscheiben erfolgen, so dass eine vereinfachte Bedienung und Steuerung des Ventils angegeben wird. Beispielsweise kann mit nur einem Handgriff das Ventil maximal geöffnet oder geschlossen oder auf dazwischen liegende Positionen eingestellt werden.

Bevorzugt basiert die Bewegung, insbesondere Rotation, der Ventilscheiben mittels der Mitnehmerkonstruktion bei Drehung einer drehbeweglichen Ventilscheibe auf einer mechanischen Mitnahme mindestens einer weiteren drehbeweglichen Ventilscheibe. Bevorzugt sind hierzu Mitnehmerelemente, die ein mechanisches Ineinandergreifen der Ventilscheiben und der Mitnehmerkonstruktion während einer Drehbewegung ermöglichen, vorgesehen.

Auch ist es möglich, dass die Mitnahme zumindest teilweise auf Haftreibungseffekten zwischen benachbarten Ventilscheiben basiert. Zu diesem Zweck können die Ventilscheiben beispielsweise auf einer gemeinsamen Achse gelagert sein und flächig aneinander angrenzend angeordnet sein, so dass eine möglichst große Reibungsfläche zwischen benachbarten Ventilscheiben gegeben ist.

Weiter ist es möglich im Rahmen der Mitnehmerkonstruktion Rastelemente an einer Ventilscheibe oder an mehreren Ventilscheiben und/oder an weiteren Elementen, beispielsweise in Form von Rastnasen und gegenförmigen Aussparungen, vorzusehen.

Die Drehung der aktiv gedrehten Ventilscheibe oder Ventilscheiben kann manuell oder mittels motorischem Antrieb bewirkt werden, beispielsweise kann ein Schrittmotor eingesetzt werden.

Alternativ zu der beschriebenen Kopplung der Drehbewegung der Ventilscheiben untereinander, kann auch eine unabhängige Drehung der Ventilscheiben voneinander vorgesehen sein. Beispielsweise können die Ventilscheiben einzeln manuell gedreht oder motorisch angesteuert werden. Gemäß der Alternative können vorteilhaft Abstandshalter zur Verringerung der Haftreibung zwischen den Ventilscheiben vorgesehen sein, damit ein Mitdrehen gerade verhindert wird. Eine unabhängige Drehung der Scheiben voneinander ermöglicht eine einfachere gezielte Feineinstellung des Öffnungsgrades des Ventils.

Bei einer weiteren Ausführungsform des Ventils weist das Gehäuse einen drehbaren Einsatz auf und ist die erste drehbewegliche Ventilscheibe drehfest in dem Einsatz angeordnet.

Auf diese Weise kann durch Drehung des Einsatzes eine Drehung der ersten drehbeweglichen Ventilscheibe bewirkt werden. Durch die Mitnehmerkonstruktion können weitere drehbewegliche Ventilscheiben, insbesondere eine zweite drehbewegliche Ventilscheibe, mitbewegt werden. Insbesondere ist die erste drehbewegliche Ventilscheibe drehfest im Einsatz angeordnet und die drehfest angeordnete Ventilscheibe drehfest im Gehäuse angeordnet und die zweite drehbewegliche Ventilscheibe oder die weiteren drehbeweglichen Ventilscheiben sind zwischen den beiden erstgenannten Ventilscheiben angeordnet und jeweils relativ zu diesen drehbeweglich.

Bei drei Ventilscheiben ist beispielsweise die zweite drehbewegliche Ventilscheibe jeweils gegenüber der drehfest im Gehäuse angeordneten und der drehfest im Einsatz angeordneten Ventilscheibe drehbeweglich. Die drehfest im Einsatz angeordnete Ventilscheibe ist ebenfalls gegenüber der drehfest im Gehäuse angeordneten Ventilscheibe drehbeweglich.

An der Innenseite des Einsatzes und an der Innenseite des Teils des Gehäuses, in dem die drehfest angeordnete Ventilscheibe angeordnet ist, können Gleitschienen vorgesehen sein, in denen die zweite drehbewegliche Ventilscheibe und/oder die weiteren drehbeweglichen Ventilscheiben drehbeweglich angeordnet sind. Insbesondere können die zweite drehbewegliche Ventilscheibe und/oder die weiteren drehbeweglichen Ventilscheiben zumindest teilweise im Einsatz und in einem weiteren Teil des Gehäuses angeordnet sein.

Bevorzugt sind Nuten in Umfangsrichtung des Einsatzes zur Aufnahme von Dichtelementen, insbesondere Dichtringen, vorgesehen, die den Einsatz gegen das Gehäuse abdichten, so dass das zu regulierende Medium nicht daran vorbeiströmen kann.

Zwischen dem Einsatz und mindestens einem Teil des Gehäuses, gegenüber dem der Einsatz gedreht wird, kann ein Gleitelement, bevorzugt zumindest teilweise bestehend aus einem Polymer, insbesondere Polytetrafluorethylen (PTFE), vorgesehen sein. Insbesondere kann das Gleitelement als Gleitscheibe oder Gleitring ausgebildet sein. Mithilfe des Gleitelements wird eine geringere Reibung zwischen dem Einsatz und dem Gehäuse erreicht, so dass geringere Drehkräfte aufgewendet werden müssen.

Bei einer weiteren Ausführungsform des Ventils ist ein Handgriff außen am Gehäuse vorgesehen und die Betätigung des Handgriffs bewirkt eine Drehung des Einsatzes.

Somit wird eine einfache Bedienung des Ventils ermöglicht. Auch ermöglicht das Vorsehen eines Handgriffs eine geometrisch simple Ausgestaltung und somit geringe Herstellungskosten des Ventils. Weiterhin ermöglicht ein Handgriff außen am Gehäuse ein vereinfachtes Sichtbarmachen der Stellung des Ventils, ob es sich also in der geschlossenen oder in einer geöffneten Stellung, insbesondere der maximal geöffneten Stellung, befindet.

Insbesondere kann die Drehung des Einsatzes durch eine Drehung des Handgriffs bewirkt werden. Es kann ein Verbindungselement am Handgriff vorgesehen sein, das in den Einsatz eingreift und diesen somit bewegt.

Der Handgriff ist bevorzugt mittels eines Befestigungselements, beispielsweise einer Schraube oder eines Stiftes, an dem Gehäuse, beispielsweise mittels Befestigung an dem Einsatz, befestigt. Zu diesem Zweck können Aufnahmen für das Befestigungselement am Handgriff und am Einsatz vorgesehen sein. Bevorzugt ist eine Aussparung am Gehäuse vorgesehen, die eine Drehung des Handgriffs und somit auch des Einsatzes in einem bestimmten Winkelbereich ermöglicht. So kann ein einfaches Öffnen und Schließen des Ventils mittels des Handgriffs realisiert und die Öffnungsstellung des Ventils auf einfache Art von außen sichtbar gemacht werden.

Erfindungsgemäß sind Endanschläge zur Begrenzung der Drehbewegung der drehbeweglichen Ventilscheiben vorgesehen.

Auf diese Weise kann eine mechanisch einfache Begrenzung der Drehung, bevorzugt auf einen maximalen Winkel relativ zu der drehfest angeordneten Ventilscheibe, bewirkt werden. Bevorzugt begrenzen die Endanschläge die Drehung der Ventilscheiben in einer Drehrichtung jeweils auf einen Winkel, der der ersten relativen Position der Ventilscheiben entspricht und in der anderen Drehrichtung jeweils auf einen Winkel, der der zweiten relativen Position der Ventilscheiben entspricht. Für eine Ventilscheibe sind bevorzugt jeweils mindestens zwei Endanschläge vorgesehen. Die Ventilscheiben weisen bevorzugt umfangsseitig sich in radiale Richtung erstreckende Vorsprünge auf, die in der ersten bzw. zweiten relativen Position gegen die Endanschläge stoßen, so dass die Drehung der Ventilscheiben begrenzt wird.

Weitere Anschläge, beispielsweise Zwischenanschläge, können vorgesehen sein, die die Drehung nicht absolut begrenzen, zu deren Überwindung jedoch ein gewisser Kraftaufwand nötig ist, so dass diskrete Zwischenpositionen zwischen der ersten und der zweiten relative Position der Ventilscheiben definiert werden können. Auf diese Weise kann gezielt ein Öffnungsgrad des Ventils eingestellt werden. Beispielsweise können die Zwischenanschläge als sich radial nach innen erstreckende auf der Innenseite des Einsatzes und/oder auf der Innenseite des Gehäuses, insbesondere jeweils in den Gleitschienen, angeordnete Vorsprünge ausgebildet sein.

Gleichzeitig können die Endanschläge der Verstärkung der Mitbewegung der drehbeweglichen Ventilscheiben im Rahmen der Mitnehmerkonstruktion dienen.

Mithilfe der Endanschläge ist die Drehbewegung der Ventilscheiben leichter steuerbar, insbesondere im Falle der Benutzung eines Antriebsmotors für die Drehung. Darüber hinaus kann mithilfe der Endanschläge sichergestellt werden, dass die Ventilscheiben die erste oder die zweite relative Position erreicht haben.

Bei einer weiteren Ausführungsform begrenzen die Endanschläge die Drehbewegung einer ersten drehbeweglichen Ventilscheibe auf eine Drehung um einen maximalen Winkel β, bevorzugt β = 240°, relativ zu der mindestens einen drehfest angeordneten Ventilscheibe und die Drehbewegung mindestens einer weiteren drehbeweglichen Ventilscheibe auf eine Drehung um einen maximalen Winkel γ, bevorzugt γ = 120°, relativ zu der mindestens einen drehfest angeordneten Ventilscheibe.

Die Winkel β und γ können vorteilhaft je nach Anzahl der Ventilscheiben und Größe der Durchtrittsöffnungen, insbesondere Öffnungswinkel der Kreissektoren, gewählt werden. Sind beispielsweise drei Ventilscheiben jeweils mit mindestens einer Durchtrittsöffnung in Form eines Kreissektors mit (Gesamt-) Öffnungswinkel von 240°, also beispielsweise eine Kreissektor-Öffnung mit Öffnungswinkel 240° oder zwei oder mehr Kreissektor-Öffnungen mit einem gesamten Öffnungswinkel von 240°, wie etwa zwei Kreissektor-Öffnungen mit jeweils 120°, vorhanden, so können die Endanschläge vorteilhaft die Drehungen um maximale Winkel β = 240° und γ = 120° begrenzen. Auf diese Weise ist die erste und die zweite relative Position der Ventilscheiben durch die Endanschläge begrenzt und es kann eine möglichst große maximale Öffnungsfläche in Bezug auf den Strömungsquerschnitt erreicht werden.

Insbesondere kann durch die Endanschläge die Drehung der ersten drehbeweglichen Ventilscheibe durch die Mitnehmerkonstruktion, der aktiv gedrehten Ventilscheibe, auf 240° begrenzt sein und die Drehung der zweiten drehbeweglichen Ventilscheibe durch die Mitnehmerkonstruktion, der mitgedrehten Ventilscheibe, auf 120° gegenüber der drehfest angeordneten Ventilscheibe begrenzt sein.

Wird die Drehung der aktiv gedrehten Ventilscheibe auf 240° begrenzt, so kann die Druckschlaggefahr verringert werden, da für den Schließvorgang eine Drehung von 240° anstatt beispielsweise nur 90°, wie bei aus dem Stand der Technik bekannten Ventilen, notwendig ist. Ein Druckschlag oder Druckstoß bezeichnet dabei eine dynamische Druckänderung des zu regulierenden Mediums, beispielsweise Fluides. Da Druckanschläge neben einem Verursachen von Lärm auch zu einer Verkürzung der Lebensdauer des Ventils führen, kann so neben dem Benutzungskomfort auch die Lebensdauer des Ventils erhöht werden.

Darüber hinaus ergeben sich für einen größeren Ventilwinkel zwischen erster und zweiter relativer Position bessere Regeleigenschaften, insbesondere bei Verwendung des Ventils in Kombination mit diskreten Schrittmotoren, da die einzelnen Regelschritte so größer ausfallen können.

Durch die Endanschläge ist bevorzugt die Drehung der ersten drehbeweglichen Ventilscheibe durch die Mitnehmerkonstruktion, der aktiv gedrehten Ventilscheibe, auf 120° begrenzt und die Drehung der zweiten drehbeweglichen Ventilscheibe durch die Mitnehmerkonstruktion, der mitgedrehten Ventilscheibe, ist bevorzugt auf 120° gegenüber der drehfest angeordneten Ventilscheibe begrenzt.

Erfindungsgemäß begrenzen die Endanschläge die Drehbewegung der drehbeweglichen Ventilscheiben in Relation zueinander benachbarter Ventilscheiben jeweils betragsmäßig auf denselben maximalen Winkel δ, bevorzugt δ = 120°.

Dies ermöglicht eine einfache Geometrie sowohl der Ventilscheiben als auch der Endanschläge und Gleitschienen. Erfindungsgemäß handelt es sich bei den drehbeweglichen und auch der drehfest angeordneten Ventilscheiben um die gleichen Ventilscheiben. So kann die Herstellung des Ventils erheblich vereinfacht werden.

Sind mehr als drei Ventilscheiben vorgesehen, können neben den Winkeln β und γ weitere maximale Begrenzungswinkel vorgesehen sein. Beispielsweise kann bei vier Ventilscheiben ein weiterer maximaler Winkel ε vorgesehen sein. Die Winkel β, γ und ε können die Drehbewegung der drehbeweglichen Ventilscheiben beispielsweise auf 90°, 180° und 270° gegenüber einer drehfest angeordneten Ventilscheibe begrenzen. Dies ist insbesondere vorteilhaft bei vier Ventilscheiben mit jeweils einer Öffnungsfläche in Form eines Kreissektors mit Öffnungswinkel von jeweils 90°. Auf diese Weise kann die maximale Öffnungsfläche in der zweiten Position auf bis zu 75 % erhöht werden.

Weitere Merkmale und Vorteile der Erfindung ergeben sich aus der nachfolgenden Beschreibung von Ausführungsbeispielen, wobei auf die beigefügte Zeichnung Bezug genommen wird.

In der Zeichnung zeigen
- Fig. 1a-d: verschiedene perspektivische Ansichten eines ersten Ausführungsbeispiels des erfindungsgemäßen Ventils,
- Fig. 2: eine Schnittansicht des Ausführungsbeispiels des erfindungsgemäßen Ventils aus Fig. 1,
- Fig. 3a-b: Ausführungsbeispiele der Ventilscheiben des erfindungsgemäßen Ventils,
- Fig. 4a-b: perspektivische Ansichten der Ventilscheiben aus Fig. 3b in der ersten und der zweiten relativen Position,
- Fig. 5a-b: perspektivische Ansichten des Einsatzes des Ausführungsbeispiels des erfindungsgemäßen Ventils aus Fig. 1 und
- Fig. 6a-b: perspektivische Ansichten des Gehäuseteils mit drehfest angeordneter Ventilscheibe des Ausführungsbeispiels des erfindungsgemäßen Ventils aus Fig. 1.

In der nachfolgenden Beschreibung der verschiedenen erfindungsgemäßen Ausführungsbeispiele werden Bauteile und Elemente mit gleicher Funktion und gleicher Wirkungsweise mit denselben Bezugszeichen versehen, auch wenn die Bauteile und Elemente bei den verschiedenen Ausführungsbeispielen in ihrer Dimension oder Form Unterschiede aufweisen können.

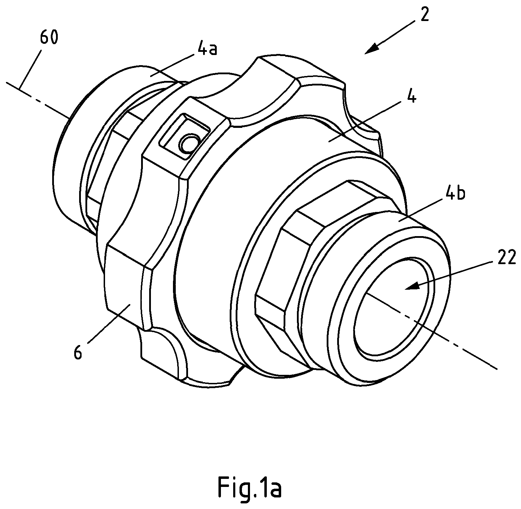

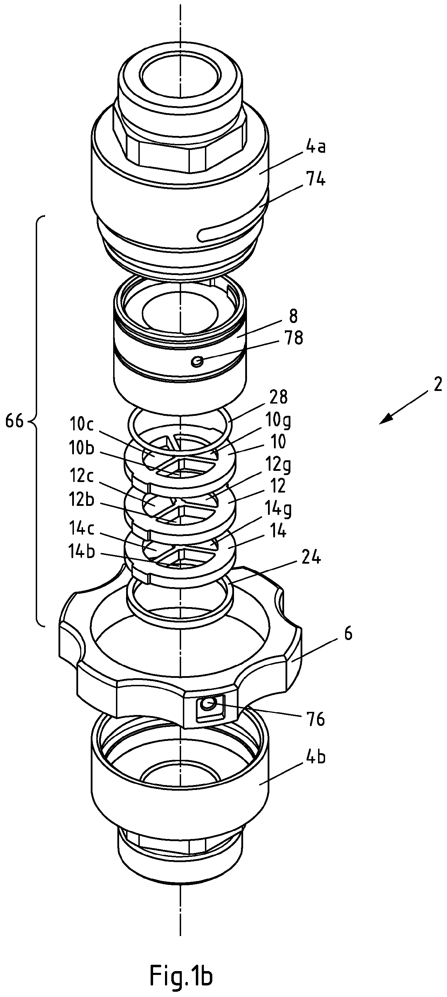

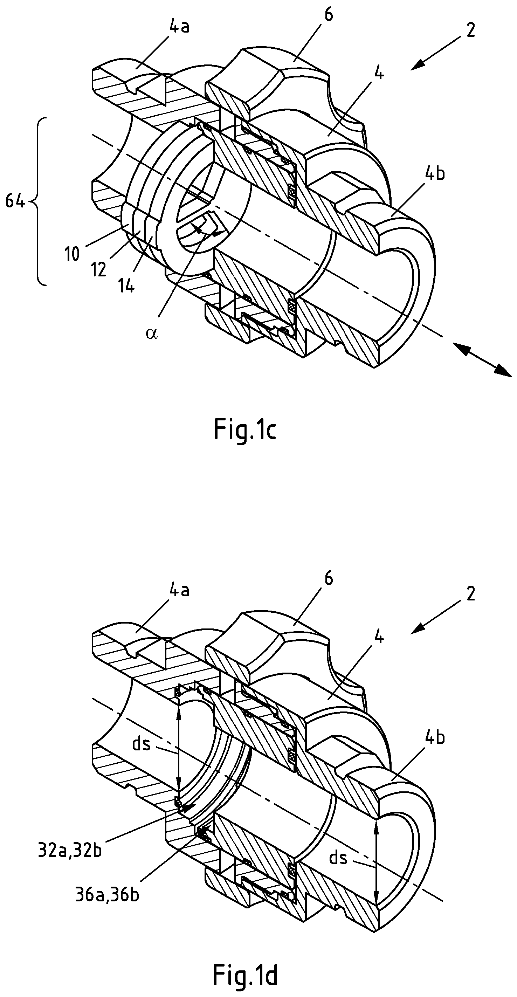

In Fig. 1a ist eine perspektivische Ansicht eines ersten Ausführungsbeispiels des erfindungsgemäßen Ventils 2 mit drei Ventilscheiben 10, 12, 14 gezeigt. Die Fig. 1b zeigt eine Explosionsansicht des Ventils 2 und Fig. 1c und 1d zeigen perspektivische Schnittansichten des Ventils 2 entlang der Längsachse 60 in Fig. 1a mit und ohne in dem Gehäuse 4 des Ventils 2 angeordneten Ventilscheiben 10, 12, 14.

Die Ventilscheibe 10 ist drehfest im Gehäuse 4, im Gehäuseteil 4a, angeordnet. Die drehbeweglichen Scheiben 12 und 14 sind gegenüber der drehfest angeordneten Ventilscheibe 10 drehbeweglich angeordnet. Bei diesem Ausführungsbeispiel weisen die Ventilscheiben 10, 12, 14 jeweils zwei Durchtrittsöffnungen 10b, 10c, 12b, 12c, 14b, 14c auf. Die Durchtrittsöffnungen 10b, 10c, 12b, 12c, 14b, 14c sind jeweils im Wesentlichen als Kreissektoren ausgebildet und weisen Öffnungswinkel α (siehe Fig. 1c) von jeweils 120° auf. Vorliegend befinden sich die Ventilscheiben 10, 12, 14 in der zweiten relativen Position 64, in der der Durchfluss des Mediums (vorliegend nicht gezeigt) maximal geöffnet ist. Das heißt in dieser Position 64 ist die Überlappung der Ventilscheiben 10, 12, 14 in Durchflussrichtung (Doppelpfeil in Fig. 1c) minimal.

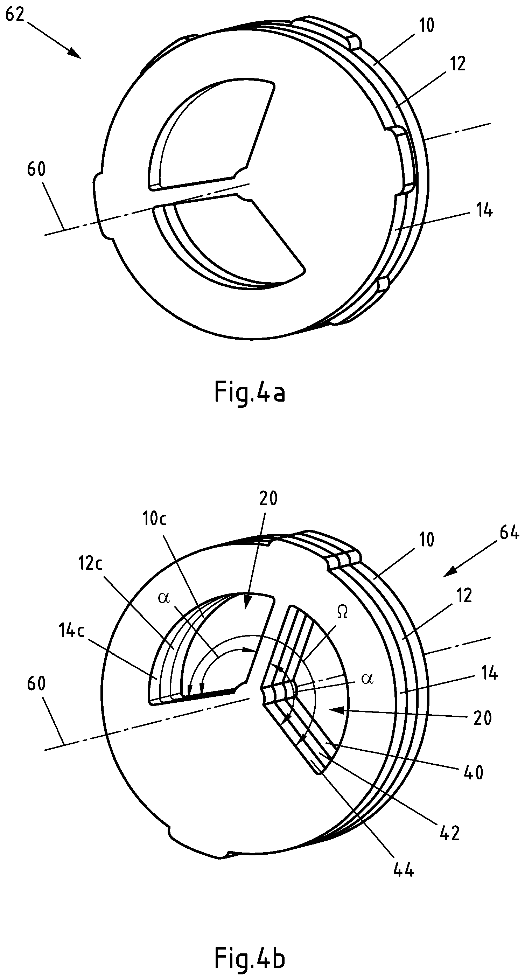

Vorliegend gezeigt geben die 10b, 10c, 12b, 12c, 14b, 14c in der zweiten relativen Position 64 eine Öffnungsfläche 20 (siehe Fig. 4b) von mehr als 60 % der Fläche des Strömungsquerschnitts 22 (siehe Fig. 1a) frei. Bei exakten geometrischen Abmessungen kann die Öffnungsfläche mehr als 66 %, bis zu 2/3, der Fläche des Strömungsquerschnitts 22 betragen. Der Druckverlust durch das Ventil 2 kann durch die Öffnungsfläche 20 von mehr als 60 % der Fläche des Strömungsquerschnitts 22 erheblich vermindert werden.

In Fig. 1b sind weitere Teile des Ventils 2 zu erkennen. Das Ventil 2 weist bei diesem Ausführungsbeispiel einen Einsatz 8, der gegenüber dem Gehäuse 4 verdrehbar ist, neben dem Gehäuseteil 4a, in dem die drehfest angeordnete Ventilscheibe 10 angeordnet ist, einen Gehäuseteil 4b sowie einen Handgriff 6 auf. Der Handgriff 6 ist derart ausgebildet, dass er in den Einsatz 8 eingreift und bei Drehung des Handgriffs 6 auf einfache Art eine Drehung des Einsatzes 8 bewirken kann. So kann das Ventil 2 von der ersten Position 62 (siehe Fig. 4a), Ventil geschlossen, in die zweite Position 64, Ventil maximal geöffnet (siehe Fig. 4b), und auf Zwischenpositionen, bei denen das Ventil zumindest teilweise geöffnet ist, verstellt werden.

Der Handgriff 6 kann einfach mittels eines Befestigungselements, beispielsweise einer Schraube oder eines Stiftes (nicht dargestellt), an dem Gehäuse 4, beispielsweise mittels Befestigung an dem Einsatz 8, befestigt werden. Zu diesem Zweck sind im vorliegenden Ausführungsbeispiel Aufnahmen 76, 78 für ein Befestigungselement am Handgriff 6 und am Einsatz 8 vorgesehen (siehe Fig. 1b). Durch das Vorsehen einer Aussparung 74 am Gehäuseteil 4a, hier in Form eines Schlitzes, der sich in Umfangsrichtung um 240° entlang der Außenseite des Gehäuseteils 4a erstreckt, wird mittels der Drehung des Handgriffs 6 die Drehung des Einsatzes 8 um 240° ermöglicht. Damit ist ein einfaches Öffnen und Schließen des Ventils 2 mittels des Handgriffs 6 realisiert und auch die Öffnungsstellung des Ventils 2 klar ersichtlich.

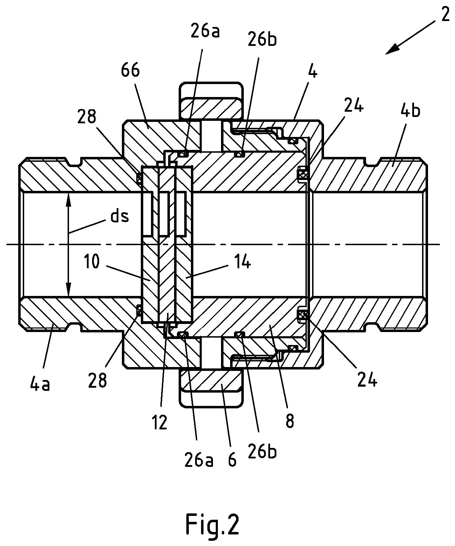

Weiter sind Dichtringe 26a, 26b, mit denen der Einsatz 8 gegenüber dem Gehäuse 4 abgedichtet wird, ein Dichtring 28 zur Abdichtung der drehfesten Ventilscheibe 10 gegenüber dem Gehäuse 4 und ein Dichtring 30 zur Abdichtung der Gehäuseteile 4a, 4b gegeneinander vorgesehen (siehe auch Fig. 2).

In dem in den Fig. 1a bis 1d gezeigten Ausführungsbeispiel wird die Mitnehmerkonstruktion 66 durch die Ausgestaltung des Einsatzes 8 zusammen mit den Ventilscheiben 10, 12, 14 und dem Gehäuseteil 4a gebildet.

In Fig. 1c und 1d ist die Anordnung der Ventilscheiben 10, 12, 14 im Gehäuse 4 dargestellt. An der Position der Ventilscheiben 10, 12, 14 sind als Teil der Mitnehmerkonstruktion 66 in Fig. 1d die im Gehäuse 4 vorgesehenen Gleitschienen 32a, 32b und die im Einsatz vorgesehenen Gleitschienen 36a, 36b ersichtlich. Entlang dieser Gleitschienen ist die Ventilscheibe 12 drehbeweglich angeordnet.

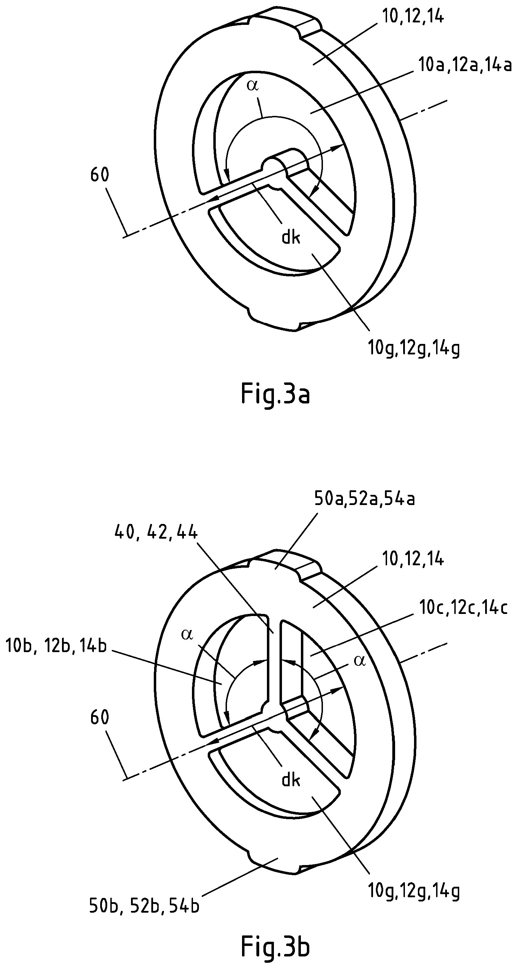

Weiter zeigt insbesondere Fig. 1d den Durchmesser ds des Strömungsquerschnitts 22 des Ventils, der im Wesentlichen dem Innenkreisdurchmesser d_{K} der als Kreissektoren ausgebildeten Durchtrittsöffnungen 10b, 10c, 12b, 12c, 14b, 14c (siehe Fig. 3b) entspricht, so dass eine maximale Öffnungsfläche 20 in Bezug auf den Strömungsquerschnitt 22 in der zweiten relativen Position 64 erreicht werden kann.

Fig. 2 zeigt nun eine teilweise geschnittene Seitenansicht durch das Gehäuse 4 des Ventils 2 aus Fig. 1a bis 1d. In dieser Ansicht sind die Positionen der Dichtringe 26a, 26b, mit denen der Einsatz 8 gegenüber dem Gehäuse 4 abgedichtet wird, des Dichtrings 28 zur Abdichtung der drehfesten Ventilscheibe 10 gegenüber dem Gehäuse 4 und des Dichtrings 30 zur Abdichtung der Gehäuseteile 4a, 4b gegeneinander gut sichtbar. Der Strömungsquerschnitt 22 des Ventils, hier gezeigt durch den angegebenen Strömungsdurchmesser ds, ist im Wesentlichen konstant entlang der Längsachse des Gehäuses 4. Der hier als PTFE-Ring ausgebildete Gleitring 24 reduziert die Reibung zwischen Einsatz 8 und Gehäuseteil 4b bei Drehung des Einsatzes 8 und verringert die Stellkräfte des Ventils 2.

In Fig. 3a und 3b sind Ausführungsbeispiele erfindungsgemäßer Ventilscheiben 10, 12, 14 gezeigt. Fig. 3a zeigt zunächst eine Ventilscheibe 10, 12, 14 mit einer Durchtrittsöffnung 10a, 12a, 14a, die als Kreissektor ausgebildet ist und einen Öffnungswinkel α von 240° aufweist. Bei Drehung der Ventilscheiben 10, 12, 14 relativ zueinander um die gemeinsame Achse 60 können die Ventilscheiben 10, 12, 14 in einer ersten Position 62 so angeordnet werden, dass der Durchfluss des Mediums blockiert ist. In einer zweiten Position 64 kann dagegen eine maximale Öffnungsfläche 20 eingestellt werden, die einem Kreissektor mit einem Öffnungswinkel von 240° entspricht. Es kann also bezogen auf einen kreisrunden Strömungsquerschnitt 22 mit gleichem Durchmesser ds wie der Innendurchmesser d_{K} der Kreissektor-Durchtrittsöffnungen 10a, 12a, 14a eine Öffnungsfläche von 2/3 erreicht werden.

Fig. 3b zeigt nun eine Ventilscheibe 10, 12, 14 mit zwei Durchtrittsöffnungen 10b, 10c, 12b, 12c, 14b, 14c, die als Kreissektor ausgebildet ist und jeweils einen Öffnungswinkel α von 120° aufweisen. Zwischen den zwei Durchtrittsöffnungen ist ein Steg 40, 42, 44 vorgesehen. Die Abschnitte 10g, 12g, 14g der Ventilscheiben 10, 12, 14 bezeichnen jeweils geschlossene Flächen, die den Durchfluss eines Mediums blockieren.

Bei Drehung der Ventilscheiben 10, 12, 14 relativ zueinander um die gemeinsame Achse 60 können die Ventilscheiben 10, 12, 14 in einer ersten Position 62 (siehe Fig. 4a) so angeordnet werden, dass der Durchfluss des Mediums blockiert ist. In einer zweiten Position 64 (siehe Fig. 4b) dagegen, kann eine maximale Öffnungsfläche 20 eingestellt werden, die einem Kreissektor mit einem Öffnungswinkel Ω von nahezu 240° entspricht, also nahezu 2/3 des Strömungsquerschnitts 22, da hier die Breite des Stegs 40, 42, 44 von der Öffnungsfläche 20 abgezogen werden muss. Bei Ventilscheiben mit jeweils einer Durchtrittsöffnung 10a, 12a, 14a mit einem Öffnungswinkel von jeweils 240° (siehe Fig. 3a) muss dagegen kein Steg für die maximale Öffnungsfläche mitberücksichtigt werden und es kann eine maximale Öffnungsfläche 20 von bis zu 2/3 des Strömungsquerschnitts 22 erreicht werden.

Es kann also für die in Fig. 3b gezeigten Ventilscheiben bezogen auf einen kreisrunden Strömungsquerschnitt 22 mit gleichem Durchmesser ds wie der Innendurchmesser d_{K} der Kreissektor-Durchtrittsöffnungen 10b, 10c, 12b, 12c, 14b, 14c eine Öffnungsfläche von nahezu 2/3 der Fläche des Strömungsquerschnitts erreicht werden. Durch das Vorsehen jeweils eines Stegs 40, 42, 44 wird die Stabilität einer einzelnen Ventilscheibe 10, 12, 14 erhöht. Gleichzeitig beträgt die maximale Öffnungsfläche jedenfalls mehr als 50 % der Fläche des Strömungsquerschnitts 22, was eine erhebliche Verminderung des Druckverlusts im Vergleich zu Ventilen, insbesondere Keramik-Scheiben Ventilen, aus dem Stand der Technik bedeutet.

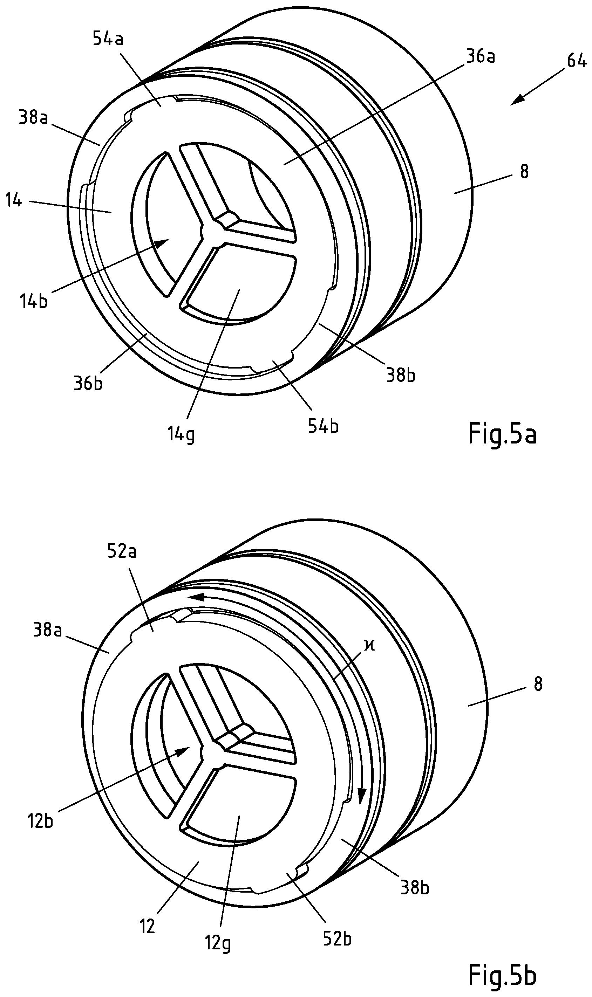

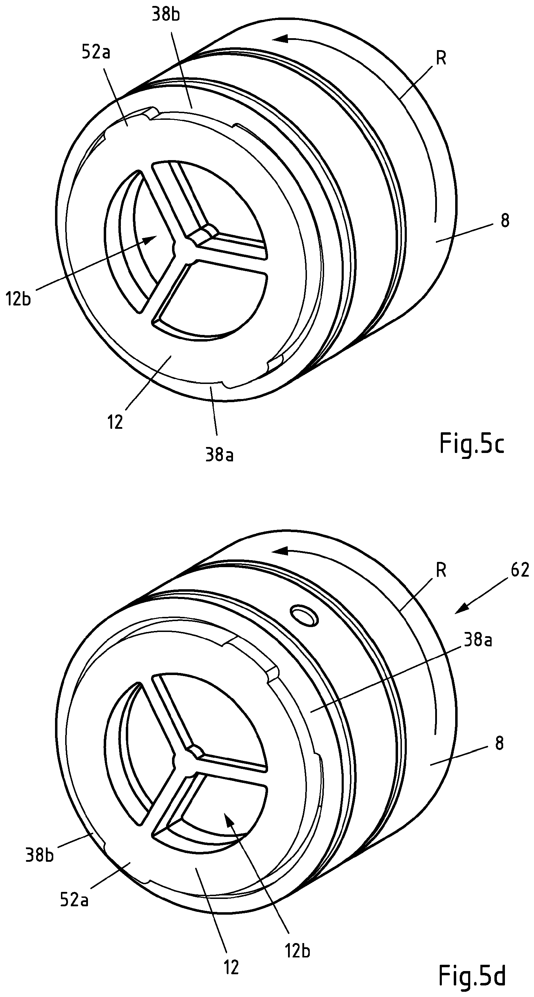

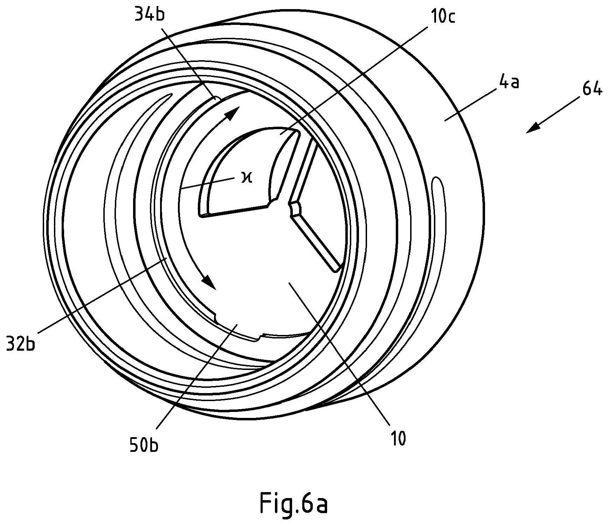

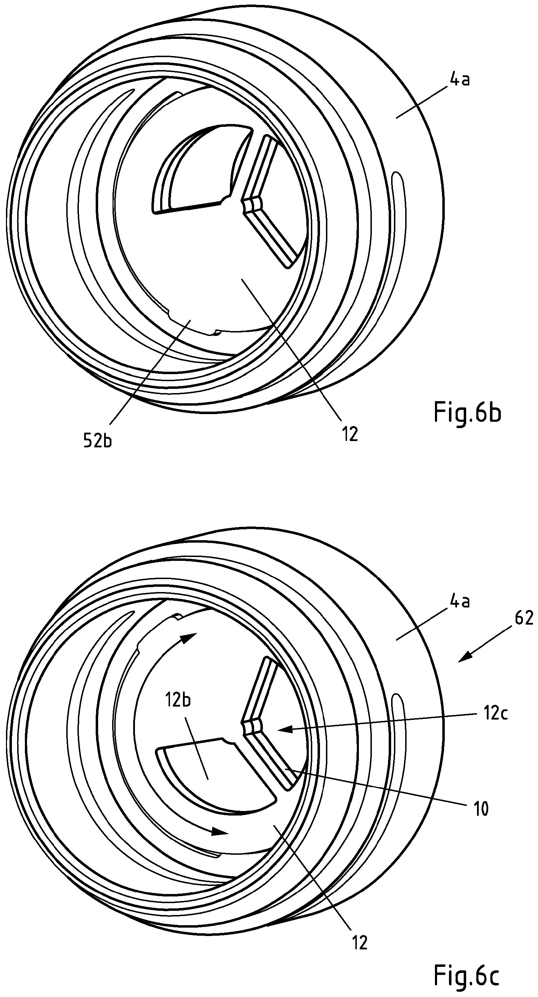

Weiter ist in Fig. 3a und Fig. 3b ersichtlich, dass die Ventilscheiben 10, 12, 14 jeweils Vorsprünge 50a, 50b, 52a, 52b, 54a, 54b aufweisen, die mit den Endanschlägen 34a, 34b, 38a, 38b im Einsatz 8 und im Gehäuseteil 4a zusammenwirken (siehe Fig. 5 und 6), so dass die Drehung der Ventilscheiben 10, 12, 14 auf einen maximalen Winkel β, γ begrenzt ist. Die Vorsprünge 52a, 52b, 54a, 54b bewirken zusammen mit den Endanschlägen 34a, 34b, 38a, 38b die Mitnahme der drehbeweglichen Ventilscheibe 12 im Rahmen der Mitnehmerkonstruktion 66. Die Vorsprünge 50a, 50b bewirken die drehfeste Anordnung der Ventilscheibe 10 im Gehäuseteil 4a.

In der Fig. 4a ist zunächst die erste relative Position 62 der Ventilscheiben 10, 12, 14 gezeigt, in der der Durchfluss des Mediums im Ventil 2 blockiert ist. Die Durchtrittsöffnungen 10b, 10c, 12b, 12c, 14b, 14c der Ventilscheiben 10, 12, 14 liegen gerade nicht übereinander, sondern eine Durchtrittsöffnung 10b, 10c, 12b, 12c, 14b, 14c, also hier ein offener Kreissektor einer Ventilscheibe 10, 12, 14, wird jeweils von einem Teil einer anderen Ventilscheibe 10, 12, 14 überdeckt, der keine Durchtrittsöffnung 10b, 10c, 12b, 12c, 14b, 14c aufweist.

Fig. 4b zeigt nun die zweite relative Position 64 der Ventilscheiben 10, 12, 14, in der die Öffnungsfläche 20 für den Durchfluss des Mediums im Ventil 2 maximal ist. Die Durchtrittsöffnungen 10b, 10c, 12b, 12c, 14b, 14c der Ventilscheiben 10, 12, 14 liegen gerade so übereinander, dass die Durchtrittsöffnungen 10b, 10c, 12b, 12c, 14b, 14c der Ventilscheiben 10, 12, 14 jeweils in Durchflussrichtung hintereinander deckungsgleich angeordnet sind.

Anhand der Fig. 5 und 6 wird nun eine Betätigung des Ventils 2, bei dem die Ventilscheiben 10, 12, 14 von einer zweiten Position 64, in der der Durchfluss des Mediums maximal geöffnet ist, in eine erste Position 62, in der der Durchfluss des Mediums blockiert ist, gezeigt.

Fig. 5a-c zeigen den Einsatz 8 in perspektivischer Ansicht, Fig. 6a-c zeigen den Gehäuseteil 4a in perspektivischer Ansicht.

In Fig. 5a ist zunächst der Einsatz 8 mit der darin drehfest angeordneten, in Relation zum Gehäuse 4 jedoch drehbeweglichen, Ventilscheibe 14 gezeigt. Durch die Vorsprünge 54a, 54b wird die Ventilscheibe 14 drehfest im Einsatz 8 gehalten. Wird der Einsatz 8 gedreht, wird die Ventilscheibe 14 um denselben Winkel mitgedreht. Weiter weist der Einsatz 8 Gleitschienen 36a, 36b auf, in denen sich die drehbewegliche Ventilscheibe 12 (dargestellt in Fig. 5b) drehen kann. Zur Begrenzung der Drehbewegung der drehbeweglichen Ventilscheibe 12 sind außerdem Endanschläge 38a, 38b vorgesehen.

In der zweiten Position 64 sind die Durchtrittsöffnungen 10b, 10c, 12b, 12c, 14b, 14c der Ventilscheiben 10, 12, 14 deckungsgleich übereinander angeordnet, die Überlappung ist maximal. Wird nun der Einsatz 8 gegenüber dem Gehäuse 4 gedreht, beispielsweise mittels des Handgriffs 6 oder auch mittels eines Schrittmotors (nicht dargestellt), wird die Ventilscheibe 14 mit dem Einsatz 8 mitgedreht. In Fig. 5b ist der Einsatz 8 mit den Ventilscheiben 10, 12 vor der Drehung gezeigt.

Während der Drehung des Handgriffs 6 und somit des Einsatzes 8 im Winkelbereich von 0° bis 120° erfolgt zunächst keine Mitdrehung der Ventilscheibe 12 (siehe Fig. 5c). Die Vorsprünge 52a, 52b der Ventilscheibe 12 bewegen sich in diesem Winkelbereich in den Gleitschienen 36a, 36b, die vorliegend jeweils einen Kreisbogen *κ* über einen Winkel von 120° beschreiben und durch die Endanschläge 38a, 38b begrenzt werden, relativ zum Einsatz 8 und stehen gleichzeitig relativ zu den Gleitschienen 32a, 32b des Gehäuseteils 4a fest. Die Ventilscheibe 14 im Einsatz 8 hat sich nach einer Drehung des Einsatzes 8 um 120° gegenüber der Ventilscheibe 12 um 120° gedreht.

Nach einer Drehung (Drehrichtung gemäß Rotationspfeil R in Fig. 5c) des Einsatzes 8 um 120° liegen die Vorsprünge 52a, 52b der Ventilscheibe 12 an den Endanschlägen 38a, 38b an (siehe Fig. 5c), wobei der Endanschlag 38b an dem Vorsprung 52a anliegt und der Endanschlag 38a an dem Vorsprung 52b anliegt. Nun ist nur die Durchtrittsfläche 12b nicht durch die Ventilscheibe 14 verdeckt.

Wird der Einsatz 8 nun weiter im Winkelbereich 120° bis 240°, bewirkt durch Drehung des Handgriffs 6, relativ zur drehfest angeordneten Ventilscheibe 10 gedreht, ist die Ventilscheibe 12 mittels der Vorsprünge 52a, 52b und der Endanschläge 38a, 38b in Drehrichtung drehfest relativ zum Einsatz 8 und der Ventilscheibe 14 arretiert. Dies ist in Fig. 5d gezeigt.

Gleichzeitig wird die Ventilscheibe 12 relativ zum Gehäuseteil 4a gedreht, die Vorsprünge 52a, 52b bewegen sich in den Gleitschienen 32a, 32b des Gehäuseteils 4a (siehe Fig. 6b und 6c). Fig. 6a zeigt den Gehäuseteil 4a mit drehfest gegenüber dem Gehäuse 4 angeordneter Ventilscheibe 10. In Fig. 6b ist die Ventilscheibe 12 zusätzlich vor, während und nach der Drehung des Einsatzes 8 um 120° gezeigt, da sich in diesem Winkelbereich die Ventilscheibe 12 nicht mitdreht.

Bei Drehung des Einsatzes 8 im Winkelbereich von 120° bis 240° wird die Bewegung der Ventilscheibe 12 durch Mitnahme durch den Einsatz 8 hervorgerufen, wobei die Kraftübertragung zwischen dem Einsatz 8 und der Ventilscheibe 12 mithilfe der Endanschläge 38a, 38b des Einsatzes 8 sowie der Vorsprünge 52a, 52b der Ventilscheibe 12 realisiert wird.

Nach einer Drehung des Handgriffs 6 und somit des Einsatzes 8 um 240° liegen die Vorsprünge 52a, 52b der Ventilscheibe 12 sowohl an den Endanschlägen 38a, 38b des Einsatzes als auch an den Endanschlägen 34a, 34b des Gehäuseteils 4a an, wobei der Vorsprung 52a am Endanschlag 34b und der Vorsprung 52b am Endanschlag 34a anliegt. Dies ist in Fig. 6c gezeigt, wo nur die Durchtrittsöffnung 12c nicht von der Ventilscheibe 10 verdeckt ist. In Zusammenschau mit Fig. 5d, wo nur Durchtrittsöffnung 12b nicht von der Ventilscheibe 14 verdeckt ist, ist also jede Durchtrittsöffnung 12b, 12c der Ventilscheibe 12 nun verdeckt. In dieser ersten Position 62 ist das Ventil 2 somit vollständig geschlossen. Die Überlappung der Durchtrittsöffnungen 10b, 10c, 12b, 12c, 14b, 14c ist nun minimal und der Strömungsquerschnitt 22 verschlossen.

Bei Drehung des Einsatzes 8 mit der Ventilscheibe 14 um 240° gegenüber dem Gehäuse 4 und also dem Gehäuseteil 4a, wird die Ventilscheibe 12 um 120° gegenüber der Ventilscheibe 14 und gleichzeitig auch um 120° gegenüber der Ventilscheibe 10 gedreht. Die Drehung der Ventilscheibe 12 erfolgt im Gehäuseteil 4a entlang der Gleitschienen 32a, 23b und wird durch die Endanschläge 34a (gegenüber 34b, verdeckt von Gehäuseteil 4a), 34 b begrenzt. Die Gleitschienen 32a, 23b beschreiben jeweils ebenfalls einen Kreisbogen *κ* mit einem Winkel von 120°. Bei dieser Drehung ist also die Ventilscheibe 14 um 240° gegenüber der Ventilscheibe 10 gedreht. Insgesamt erfolgt also eine Drehung des Einsatzes 8 um 240° gegenüber dem Gehäuse 4.

Zwischen den gezeigten Positionen 62, 64 ist außerdem eine stufenlose Regelung möglich, so dass das Ventil 2 in den Zwischenpositionen zumindest teilweise für den Durchfluss des Mediums geöffnet ist.

## Patentansprüche

1. Ventil (2) zur Regulierung eines Durchflusses eines Mediums,
- mit einem Gehäuse (4) und
- mit mindestens drei Ventilscheiben (10, 12, 14),
- wobei mindestens eine Ventilscheibe (10) im Gehäuse (4) drehfest angeordnet ist,
- wobei mindestens zwei Ventilscheiben (12, 14) gegenüber der mindestens einen drehfest angeordneten Ventilscheibe (10) drehbeweglich angeordnet sind,
- wobei die Ventilscheiben (10, 12, 14) jeweils mindestens eine Durchtrittsöffnung (10a, 10b, 10c, 12a, 12b, 12c, 14a, 14b, 14c) aufweisen,
- wobei die Durchtrittsöffnungen (10a, 10b, 10c, 12a, 12b, 12c, 14a, 14b, 14c) derart ausgebildet sind, dass in einer ersten relativen Position (62) der Ventilscheiben (10, 12, 14) der Durchfluss des Mediums blockiert ist und in einer zweiten relativen Position (64) maximal geöffnet ist und
- wobei die Durchtrittsöffnungen (10a, 10b, 10c, 12a, 12b, 12c, 14a, 14b, 14c) derart ausgebildet sind, dass in der zweiten relativen Position (64) die Durchtrittsöffnungen (10a, 10b, 10c, 12a, 12b, 12c, 14a, 14b, 14c) der Ventilscheiben (10, 12, 14) eine Öffnungsfläche (20) von mehr als 50 %, bevorzugt von mehr als 60 %, besonders bevorzugt von mehr als 65 %, der Fläche des Strömungsquerschnitts (22) freigeben,
- wobei die Ventilscheiben (10, 12, 14) eine baugleiche Geometrie aufweisen,
- wobei Endanschläge (34a, 34b, 38a, 38b) zur Begrenzung der Drehbewegung der drehbeweglichen Ventilscheiben (12, 14) vorgesehen sind
**dadurch gekennzeichnet,**
- **dass** die Endanschläge (34a, 34b, 38a, 38b) die Drehbewegung der drehbeweglichen Ventilscheiben (10, 12) in Relation zueinander benachbarter Ventilscheiben (10, 12) jeweils betragsmäßig auf denselben maximalen Winkel δ, bevorzugt δ = 120°, begrenzen, und
- **dass** es sich bei den drehbeweglichen und der drehfest angeordneten Ventilscheiben (10, 12, 14) um die gleichen Ventilscheiben (10, 12, 14) handelt.

2. Ventil nach Anspruch 1,
**dadurch gekennzeichnet,**
**dass** die Ventilscheiben (10, 12, 14) ein keramisches Material aufweisen.

3. Ventil nach Anspruch 1 oder 2,
**dadurch gekennzeichnet,**
- **dass** die Durchtrittsöffnungen (10a, 12a, 14a) im Wesentlichen als Kreissektoren ausgebildet sind und
- **dass** die Kreissektoren jeweils einen Öffnungswinkel α von größer 180°, bevorzugt von größer 200°, besonders bevorzugt von 240°, aufweisen.

4. Ventil nach Anspruch 1 oder 2,
**dadurch gekennzeichnet,**
- **dass** die Ventilscheiben (10, 12, 14) jeweils mindestens zwei Durchtrittsöffnungen (10b, 10c, 12b, 12c, 14b, 14c) aufweisen,
- **dass** die Durchtrittsöffnungen (10b, 10c, 12b, 12c, 14b, 14c) im Wesentlichen als Kreissektoren ausgebildet sind und
- **dass** die Kreissektoren jeweils einen Öffnungswinkel *α* von größer 90°, bevorzugt von größer 100°, besonders bevorzugt von 120°, aufweisen.

5. Ventil nach einem der Ansprüche 1 bis 4,
**dadurch gekennzeichnet,**
- **dass** eine Mitnehmerkonstruktion (66) zur Drehung der drehbeweglichen Ventilscheiben (12, 14) von der ersten Position (62) in die zweite Position (64) der Ventilscheiben (10, 12, 14) vorgesehen ist und
- **dass** die Mitnehmerkonstruktion (66) bei Drehung mindestens einer ersten drehbeweglichen Ventilscheibe (14) die Drehung mindestens einer zweiten drehbeweglichen Ventilscheibe (12), vorzugsweise aller weiteren drehbeweglichen Ventilscheiben (12), bewirkt.

6. Ventil nach Anspruch 5,
**dadurch gekennzeichnet,**
- **dass** das Gehäuse (4) einen drehbaren Einsatz (8) aufweist und
- **dass** die erste drehbewegliche Ventilscheibe (14) drehfest in dem Einsatz (8) angeordnet ist.

7. Ventil nach Anspruch 6,
**dadurch gekennzeichnet,**
- **dass** ein Handgriff (6) außen am Gehäuse (4) vorgesehen ist und
- **dass** die Betätigung des Handgriffs (6) eine Drehung des Einsatzes (8) bewirkt.

8. Ventil nach einem der Ansprüche 1 bis 7,
**dadurch gekennzeichnet,**
**dass** die Endanschläge (34a, 34b, 38a, 38b) die Drehbewegung einer ersten drehbeweglichen Ventilscheibe (14) auf eine Drehung um einen maximalen Winkel β, bevorzugt β = 240°, relativ zu der mindestens einen drehfest angeordneten Ventilscheibe (10) und die Drehbewegung mindestens einer weiteren drehbeweglichen Ventilscheibe (12) auf eine Drehung um einen maximalen Winkel γ, bevorzugt γ = 120°, relativ zu der mindestens einen drehfest angeordneten Ventilscheibe (10) begrenzen.

## Claims

1. Valve (2) for regulating the flow of a medium,
- with a housing (4) and
- with at least three valve discs (10, 12, 14),
- wherein at least one valve disc (10) is arranged in the housing (4) so as to be rotationally fixed,
- wherein at least two valve discs (12, 14) are arranged so as to be rotatable relative to the at least one valve disc (10) arranged so as to be rotationally fixed,
- wherein the valve discs (10, 12, 14) each have at least one passage opening (10a, 10b, 10c, 12a, 12b, 12c, 14a, 14b, 14c),
- wherein the passage openings (10a, 10b, 10c, 12a, 12b, 12c, 14a, 14b, 14c) are designed in such a way that in a first relative position (62) of the valve discs (10, 12, 14) the flow of the medium is blocked and in a second relative position (64) it is maximally open and
- wherein the passage openings (10a, 10b, 10c, 12a, 12b, 12c, 14a, 14b, 14c) are designed in such a way that in the second relative position (64) the passage openings (10a, 10b, 10c, 12a, 12b, 12c, 14a, 14b, 14c) of the valve discs (10, 12, 14) expose an opening area (20) of more than 50 %, preferably more than 60 %, particularly preferably more than 65 %, of the area of the flow cross-section (22),
- wherein the valve discs (10, 12, 14) have a an identical geometry,
- wherein end stops (34a, 34b, 38a, 38b) are provided to limit the rotational movement of the rotatable valve discs (12, 14),
**characterised in**
- **that** the end stops (34a, 34b, 38a, 38b) limit the rotational movement of the rotatable valve discs (10, 12) relative to each other of adjacent valve discs (10, 12) in terms of absolute value to the same maximum angle δ, preferably δ = 120°, and
- **that** the rotatable and the rotationally fixed valve discs (10, 12, 14) are identical valve discs (10, 12, 14).

2. Valve according to claim 1,
**characterised in**
**that** the valve discs (10, 12, 14) include a ceramic material.

3. Valve according to claim 1 or 2,
**characterised in**
- **that** the passage openings (10a, 12a, 14a) are essentially designed in the form of circular sectors, and
- **that** the circular sectors each have an opening angle α of greater than 180°, preferably greater than 200°, particularly preferably 240°.

4. Valve according to claim 1 or 2,
**characterised in**
- **that** the valve discs (10, 12, 14) each have at least two passage openings (10b, 10c, 12b, 12c, 14b, 14c),
- **that** the passage openings (10b, 10c, 12b, 12c, 14b, 14c) are essentially designed in the form of circular sectors, and
- **that** the circular sectors each have an opening angle α of greater than 90°, preferably greater than 100°, particularly preferably 120°.

5. Valve according to any one of claims 1 to 4,
**characterised in**
- **that** a driver structure (66) is provided for rotating the rotatable valve discs (12, 14) from the first position (62) into the second position (64) of the valve discs (10, 12, 14), and
- **that** the driver structure (66) causes the rotation of at least one second rotatable valve disc (12), preferably all further rotatable valve discs (12), upon rotation of at least one first rotatable valve disc (14).

6. Valve according to claim 5,
**characterised in**
- **that** the housing (4) has a rotatable insert (8), and
- **that** the first rotatable valve disc (14) is arranged in the insert (8) so as to be rotationally fixed.

7. Valve according to claim 6,
**characterised in**
- **that** a handle (6) is provided on the outside of the housing (4), and
- **that** the actuation of the handle (6) causes the insert (8) to rotate.

8. Valve according to any one of claims 1 to 7,
**characterised in**
**that** the end stops (34a, 34b, 38a, 38b) limit the rotational movement of a first rotatable valve disc (14) to a rotation through a maximum angle β, preferably β = 240°, relative to the at least one rotationally fixed valve disc (10) and limit the rotational movement of at least one further rotatable valve disc (12) to a rotation through a maximum angle γ, preferably γ = 120°, relative to the at least one rotationally fixed valve disc (10).

## Revendications

1. Vanne (2) de régulation d'un écoulement d'un milieu,
- avec un boîtier (4) et
- avec au moins trois disques de vanne (10, 12, 14),
- dans laquelle au moins un disque de vanne (10) est disposé de façon non rotative dans le boîtier (4),
- dans laquelle au moins deux disques de vanne (12, 14) sont disposés de façon rotative par rapport à l'au moins un disque de vanne (10) disposé de façon non rotative,
- dans laquelle les disques de vanne (10, 12, 14) comportent respectivement au moins une ouverture de passage (10a, 10b, 10c, 12a, 12b, 12c, 14a, 14b, 14c),
- dans laquelle les ouvertures de passage (10a, 10b, 10c, 12a, 12b, 12c, 14a, 14b, 14c) sont conçues de telle sorte que, l'écoulement du milieu soit bloqué dans une première position relative (62) des disques de vanne (10, 12, 14) et soit ouvert au maximum dans une seconde position relative (64), et
- dans laquelle les ouvertures de passage (10a, 10b, 10c, 12a, 12b, 12c, 14a, 14b, 14c) sont conçues de telle sorte que dans la seconde position relative (64), les ouvertures de passage (10a, 10b, 10c, 12a, 12b, 12c, 14a, 14b, 14c) des disques de vanne (10, 12, 14) débloquent une surface d'ouverture (20) de plus de 50%, préférentiellement de plus de 60%, particulièrement préférentiellement de plus de 65% de la surface de la section d'écoulement (22),
- dans laquelle les disques de vanne (10, 12, 14) présentent une géométrie identique,
- dans laquelle des butées (34a, 34b, 38a, 38b) sont prévues pour limiter le mouvement en rotation des disques de vanne rotatifs (12, 14)
**caractérisé en ce que**
- les butées (34a, 34b, 38a, 38b) limitent respectivement en amplitude le mouvement en rotation des disques de vanne rotatifs (10, 12) par rapport aux disques de vanne (10, 12) voisins au même angle maximum δ, de préférence à δ = 120°, et
- les disques de vanne (10, 12, 14) disposés de façon rotative et de façon non rotative sont les mêmes disques de vanne (10, 12, 14).

2. Vanne selon la revendication 1,
**caractérisée en ce que**
les disques de vanne (10, 12, 14) comportent un matériau céramique.

3. Vanne selon la revendication 1 ou 2,
**caractérisée en ce que**
- les ouvertures de passage (10a, 12a, 14a) sont conçues essentiellement comme des secteurs de cercle et
- les secteurs de cercle présentent respectivement un angle d'ouverture α de plus de 180°, préférentiellement de plus de 200°, particulièrement préférentiellement de plus de 240°.

4. Vanne selon la revendication 1 ou 2,
**caractérisée en ce que**
- les disques de vanne (10, 12, 14) comportent respectivement au moins deux ouvertures de passage (10b, 10c, 12b, 12c, 14b, 14c),
- les ouvertures de passage (10b, 10c, 12b, 12c, 14b, 14c) sont conçues essentiellement comme des secteurs de cercle et
- les secteurs de cercle présentent respectivement un angle d'ouverture α de plus de 90°, préférentiellement de plus de 100°, particulièrement préférentiellement de plus de 120°.

5. Vanne selon l'une des revendications 1 à 4,
**caractérisée en ce que**
- un organe d'entraînement (66) est prévu pour faire tourner les disques de vanne rotatifs (12, 14) de la première position (62) à la seconde position (64) des disques de vanne (10, 12, 14) et
- l'organe d'entraînement (66) lors de la rotation d'un premier disque de vanne rotatif (14) entraîne la rotation d'au moins un second disque de vanne rotatif (12), de préférence de tous les autres disques de vanne rotatifs (12).

6. Vanne selon la revendication 5,
**caractérisée en ce que**
- le boîtier (4) comporte une pièce rotative (8) et
- le premier disque de vanne rotatif (14) est disposé de façon non rotative dans la pièce (8).

7. Vanne selon la revendication 6,
**caractérisée en ce que**
- une poignée (6) est prévue à l'extérieur du boîtier (4) et
- l'utilisation de la poignée (6) entraîne une rotation de la pièce (8).

8. Vanne selon l'une des revendications 1 à 7,
**caractérisée en ce que**
les butées (34a, 34b, 38a, 38b) limitent le mouvement de rotation d'un premier disque de vanne rotatif (14) à une rotation d'un angle maximum β, de préférence β = 240°, par rapport à l'au moins un disque de vanne disposé de façon non rotative (10) et le mouvement de rotation d'au moins un autre disque de vanne rotatif (12) à une rotation d'un angle maximum γ, de préférence y = 120°, par rapport à l'au moins un disque de vanne disposé de façon non rotative (10).
